# FASCICULE DE BREVET EUROPEEN

(11) **EP 2 873 607 B1**
(45) Date de publication et mention de la délivrance du brevet: **04.05.2016**
(21) Numéro de dépôt: 14192490.2
(22) Date de dépôt: 10.11.2014
(51) Int. Cl.: B64B 1/64, F16K 43/00, F16K 1/22

(54) **Dispositif de libération de gaz contenu dans un ballon atmosphérique**
Vorrichtung zur Freisetzung des in einem Wetterballon enthaltenen Gases
Device for releasing gas contained in an atmospheric balloon

(30) Priorité: 15.11.2013 FR 1361226
(43) Date de publication de la demande: 20.05.2015
(73) Titulaire: CENTRE NATIONAL D'ÉTUDES SPATIALES (C N E S), 75001 Paris (FR); Comat (Concept Mecanique et Assistance Technique), 31130 Flourens (FR)
(72) Inventeur: Huens, Thomas, 3157 LANTA (FR); Bourrec, Lionel, 31540 ROUMENS (FR); Pires, Victor, 31140 SAINT-LOUP-CAMMAS (FR)
(74) Mandataire: Cabinet BARRE LAFORGUE & associés

(56) Documents cités:
- EP-A2- 0 192 110
- DE-U1-202009 017 617
- US-A- 2 976 884
- US-A- 3 913 603
- US-A1- 2004 127 153

## Description

L'invention concerne un dispositif de libération d'une composition gazeuse contenue dans une enceinte de ballon atmosphérique. L'invention concerne plus particulièrement un dispositif de libération d'une composition gazeuse contenue dans une enceinte de ballon stratosphérique ouvert.

Les ballons atmosphériques tels que les ballons sondes par exemple traversent de nombreuses couches atmosphériques, des plus hautes pressions au décollage à partir du sol vers de très faibles pressions dans les hautes strates de l'atmosphère. La quantité de gaz porteur contenu par les ballons atmosphériques doit donc être régulée, et plus particulièrement, du gaz doit être libéré afin de maintenir la tension de l'enveloppe du ballon atmosphérique dans une fourchette de valeurs de fonctionnement normal.

De plus, la libération de gaz porteur de l'enveloppe permet de contrôler l'altitude du ballon et donc éventuellement de contrôler en partie sa trajectoire.

En outre, la libération contrôlée du gaz porteur en fin de mission permet de maîtriser la zone d'atterrissage du ballon atmosphérique.

Les ballons atmosphériques actuels connus comprennent un unique dispositif de libération de gaz installé au sommet de l'enveloppe du ballon atmosphérique. Le dispositif comprend notamment un volet de libération de gaz commandé entre une position fermée et au moins une position ouverte.

Cependant, les ballons atmosphériques sont exposés à des conditions de fonctionnement extrêmes : basse pression, basse température, exposition aux radiations cosmiques (solaires notamment), formation de givre, etc. Les dispositifs embarqués - y compris les dispositifs de libération de gaz - sont donc exposés à ces conditions et sont susceptibles de tomber en panne. Le contrôle de la trajectoire du ballon est alors compromis et sa durée de vie largement réduite, que le dispositif de libération soit bloqué ouvert ou bloqué fermé.

L'invention vise donc à pallier ces inconvénients, Les documents US2004/0127153, EP0192110 ou US2976884 décrivent des vannes à plusieurs volets.

L'invention vise à proposer un dispositif de libération d'une composition gazeuse contenue dans l'enveloppe d'un ballon atmosphérique résistant aux pannes, notamment à une panne unique.

L'invention vise plus particulièrement un tel dispositif qui peut surmonter une panne en position fermée et une panne en position ouverte.

L'invention vise également à proposer un tel dispositif qui peut être installé en lieu et place des dispositifs actuels.

L'invention vise à proposer un tel dispositif qui est léger.

Dans tout le texte, on désigne par « ballon atmosphérique » un aérostat comprenant une enveloppe enfermant une composition gazeuse, ledit aérostat pouvant s'élever dans une atmosphère grâce à la différence de densité entre la composition gazeuse et ladite atmosphère. L'atmosphère est comprise au sens large et comprend toute les couches de l'atmosphère, y compris la stratosphère.

L'invention concerne donc un dispositif de libération d'une composition gazeuse selon la revendication 1, un procédé de contrôle d'un dispositif selon la revendication 13, un ballon atmosphérique selon la revendication 15 et un procédé de contrôle d'un ballon atmosphérique selon la revendication 17.

La composition gazeuse est avantageusement une composition gazeuse de densité inférieure à celle de l'air atmosphérique, notamment une composition comprenant une forte teneur en hélium, avantageusement de l'hélium pur, ou une forte teneur en dihydrogène, avantageusement du dihydrogène pur.

En position fermée, un volet parallèle (respectivement série) limite la libération de composition gazeuse de l'enceinte vers l'atmosphère. Plus avantageusement, un volet parallèle (respectivement série) en position fermée ferme une portion de la conduite d'évacuation de façon à empêcher la libération de composition gazeuse, de l'enceinte vers l'atmosphère, par cette portion de conduite d'évacuation.

Avantageusement, un volet parallèle (respectivement série) est dans une position ouverte dès lors que la composition gazeuse peut s'échapper par un passage laissé ouvert par le volet parallèle (respectivement série) dans la conduite d'évacuation. En position fermée, chaque volet ferme une portion de section de passage de la conduite d'évacuation, de façon à éviter, lorsque chaque volet parallèle est en position fermée et/ou que chaque volet série est en position fermée, que de la composition gazeuse ne s'échappe de l'enceinte du ballon atmosphérique par la conduite d'évacuation.

Rien n'empêche de prévoir, pour chaque volet (parallèle ou série), plusieurs positions ouvertes distinctes. Ainsi le débit de composition gazeuse à travers un passage laissé ouvert dans la conduite d'évacuation par ledit volet peut être régulé selon différentes valeurs.

Avantageusement un dispositif selon l'invention comprend une pluralité de volets parallèles fermant chacun uniquement une portion incomplète d'une section de la conduite d'évacuation, ladite section de la conduite d'évacuation étant entièrement fermée lorsque chaque volet parallèle est en position fermée.

Les volets parallèles sont donc complémentaires pour fermer une section de la conduite d'évacuation.

Chaque volet parallèle (respectivement série) est adapté pour fermer, en position fermée, une portion comprise entre 10% et 90% d'une section de passage de la conduite d'évacuation, notamment une portion comprise entre 25% et 75%, et plus particulièrement entre 40% et 60%, par exemple de l'ordre de 50%, d'une section de passage de la conduite d'évacuation.

Lesdits volets séries sont avantageusement adaptés pour que ladite section de passage de la conduite d'évacuation soit complètement fermée, lorsque tous les volets séries sont fermés, quelle que soit la position (ouverte ou fermée) de chaque volet parallèle.

L'ensemble des volets séries ferme avantageusement la même section de passage de la conduite d'évacuation que l'ensemble des volets parallèles.

Entre chaque actionneur et chaque volet, le dispositif comprend une transmission mécanique adaptée pour pouvoir transmettre et transformer un mouvement de l'actionneur à un jeu de volet comprenant au moins un volet entre une position ouverte et une position fermée de chaque volet du jeu de volet.

Dans un dispositif selon l'invention, avantageusement, tout élément mobile est disposé à l'intérieur de la conduite d'évacuation. En particulier, les volets parallèles et les volets séries sont, en position fermée et en position ouverte, contenus dans un volume délimité par ladite conduite d'évacuation. De même, les actionneurs sont contenus dans un volume délimité par ladite conduite d'évacuation. En outre, chaque pièce de chaque transmission mécanique est aussi contenue dans un volume délimité par ladite conduite d'évacuation. Ainsi, le risque d'endommagement de l'enveloppe du ballon atmosphérique par un élément mobile du dispositif de libération selon l'invention est faible.

De plus, un dispositif selon l'invention comprend en outre avantageusement, au moins trois actionneurs distincts adaptés pour pouvoir indépendamment actionner respectivement :
- au moins un premier volet parallèle,
- au moins un deuxième volet parallèle distinct du premier volet parallèle,
- chaque volet série.

Chaque actionneur de volet(s) parallèle(s) est alimenté indépendamment d'un(des) autre(s) actionneur(s) de volet(s) parallèle(s).

Chaque actionneur de volet(s) série(s) est alimenté indépendamment des actionneurs de volet(s) parallèle(s) et d'un(des) éventuels autre(s) actionneur(s) de volet(s) série(s).

De plus, un dispositif selon l'invention comprend avantageusement une chaîne de commande propre à chaque actionneur.

Ainsi, en cas de défaillance de l'actionnement d'un volet parallèle, c'est-à-dire en cas de défaillance du volet et/ou d'une transmission mécanique entre l'actionneur et le volet et/ou de son actionneur et/ou d'une chaîne de commande de l'actionneur, un autre volet parallèle contrôlé indépendamment permet d'ouvrir ou de fermer l'enceinte sur l'atmosphère extérieure de façon à libérer ladite composition gazeuse dans l'atmosphère.

Notamment, en cas de défaillance d'un volet parallèle en position initiale fermée, au moins un autre volet parallèle peut être ouvert pour libérer la composition gazeuse.

De même, en cas de défaillance d'au moins un volet parallèle en position ouverte, les volets séries sont adaptés pour fermer l'enceinte. Plus particulièrement les volets séries sont adaptés pour pouvoir contrôler un flux de composition gazeuse en se déplaçant entre une position ouverte et une position fermée.

De plus, un dispositif selon l'invention comprend plusieurs volets parallèles actionnés indépendamment et adaptés pour fermer chacun une portion non complète de la conduite d'évacuation. Ainsi, le débit de composition gazeuse libéré à travers la conduite d'évacuation peut être régulé très précisément en choisissant le nombre de volet(s) parallèle(s) en position ouverte.

Un dispositif selon l'invention comprend en outre avantageusement au moins un dispositif, dit dispositif de surveillance, adapté pour déterminer la position ouverte ou la position fermée d'au moins deux volets parallèles actionnés indépendamment et d'au moins un volet série.

Un tel dispositif de surveillance permet de déterminer la position de chaque volet actionné indépendamment d'un autre volet.

Ledit dispositif de surveillance est adapté pour pouvoir élaborer des données analogiques ou numériques représentatives d'une position de chaque volet actionné indépendamment.

Le dispositif de surveillance comprend avantageusement des micro-contacteurs adaptés pour pouvoir produire un signal de détection d'un contact d'une pièce mécanique d'une transmission mécanique entre un actionneur et un jeu de volet(s), lorsque cette pièce mécanique est dans une position correspondant à une position fermée du jeu de volets actionnés via cette transmission. Le dispositif de surveillance comprend une pluralité de micro-contacteurs, permettant ainsi de détecter la position fermée au moins de chaque jeu de volets actionné indépendamment d'un autre jeu de volets.

Un dispositif selon l'invention est avantageusement adapté pour pouvoir émettre ces données numériques, notamment sans fil à destination d'un récepteur au sol. Ainsi un opérateur est informé de l'état (« ouvert » ou « fermé » au moins) de chaque volet et peut, en cas de constat de la défaillance d'au moins un volet, commander les autres volets en conséquence.

Dans certains modes de réalisation avantageux, le dispositif de surveillance est adapté pour déterminer un degré d'ouverture de chaque volet, de façon à pouvoir déterminer le flux de composition gazeuse s'échappant de l'enceinte.

Un dispositif selon l'invention comprend avantageusement entre deux et cinq volets parallèles (respectivement série), notamment entre deux et trois volets parallèles (respectivement série). Plus avantageusement, un dispositif selon l'invention comprend deux volets parallèles et deux volets séries, lesdits volets séries étant actionnés conjointement.

Avantageusement, un dispositif selon l'invention est aussi caractérisé en ce que la conduite d'évacuation comprend un siège interposé dans ladite conduite d'évacuation entre l'enceinte et l'atmosphère extérieure, ledit siège présentant au moins une ouverture, dite ouverture d'évacuation, entre l'enceinte et l'atmosphère extérieure,
- chaque volet parallèle est adapté pour, en position fermée, être en butée contre une première face dudit siège,
- chaque ouverture d'évacuation est entièrement fermée, lorsque tous les volets parallèles sont en position fermée,
- chaque volet série est adapté pour, en position fermée, être en butée contre une deuxième face dudit siège, opposée à la première face,
- chaque ouverture d'évacuation est entièrement fermée lorsque tous les volets séries sont en position fermée.

Le siège restreint la section de la conduite d'évacuation. La somme des sections de l'ensemble des ouvertures d'évacuation (la section de l'ouverture d'évacuation lorsqu'il n'y en a qu'une) forme la section de passage de composition gazeuse, à travers la conduite d'évacuation, de l'enceinte vers l'atmosphère extérieure.

La première face, dite face extérieure, est disposée du côté de l'atmosphère extérieure. La deuxième face, dite face intérieure, est disposée du côté opposé à la face extérieure, du côté de l'enceinte.

Avantageusement chaque volet parallèle est, en position ouverte, du côté de l'atmosphère extérieure par rapport audit siège.

Avantageusement chaque volet série est, en position ouverte, du côté de l'enceinte par rapport audit siège.

Les volets parallèles et les volets séries sont adaptés pour, en position fermée, fermer la conduite d'évacuation en se refermant sur un même et unique siège. Ainsi, les volets séries, les volets parallèles et le siège forment ensemble une vanne à plusieurs volets, lesdits volets étant actionnés de façon redondante. Ainsi l'invention propose un dispositif de libération résistant à une panne unique au moins, et dont la masse est limitée.

Chaque transmission mécanique est adaptée pour que, en position fermée, chaque volet auquel ladite transmission mécanique est relié, exerce un effort non-nul sur une face dudit siège, y compris en l'absence d'effort transmis par un actionneur dudit volet à travers ladite transmission mécanique. Ainsi, même en l'absence d'alimentation en énergie de l'actionneur d'un volet, celui-ci reste en position fermée et exerce un effort sur le siège adapté pour pouvoir s'opposer à la différence de pression entre l'enceinte et l'atmosphère extérieure.

Le siège est avantageusement globalement plat et disposé dans un plan orthogonal à la direction principale de la conduite d'évacuation. Il forme un dormant, sur lequel chaque volet parallèle et chaque volet série vient en butée en position fermée.

Le siège présente avantageusement deux ouvertures d'évacuation, notamment dans des modes de réalisation d'un dispositif selon l'invention comprenant deux volets parallèles et deux volets séries. Ainsi, chaque volet parallèle ferme une ouverture d'évacuation. De même, chaque volet série ferme une ouverture d'évacuation.

Dans de tels modes de réalisation, les deux ouvertures d'évacuation sont séparées par une plateforme centrale du siège s'étendant selon un axe transverse à la conduite d'évacuation. Les deux ouvertures d'évacuation sont avantageusement symétriques par rapport à ladite plateforme centrale.

Par ailleurs, la conduite d'évacuation est avantageusement de forme globalement symétrique de révolution pour pouvoir être fixée au sommet d'une enveloppe du ballon atmosphérique.

Ainsi, chaque volet série et chaque volet parallèle présente avantageusement une forme de portion de disque.

Plus particulièrement, dans des modes de réalisation de l'invention comprenant deux ouvertures d'évacuation, les deux volets séries et les deux volets parallèles présentent avantageusement chacun une forme dite en demi-lune, c'est-à-dire une forme de demi-disque. Dans de tels modes de réalisation, chaque volet parallèle est actionné indépendamment de l'autre volet parallèle, et les volets série sont actionnés collectivement, indépendamment de chaque volet parallèle.

Avantageusement et selon l'invention,
- ledit siège comprend au moins un joint d'étanchéité sur chaque face, à la périphérie de chaque ouverture d'évacuation,
- chaque volet parallèle et chaque volet série est adapté pour, en position fermée, comprimer un joint d'étanchéité.

Plus particulièrement, les joints d'étanchéité disposés sur chaque face du siège, à la périphérie d'une même ouverture d'évacuation, sont réalisés en une seule pièce assemblée sur des bords délimitant ladite ouverture d'évacuation.

Par ailleurs, avantageusement et selon l'invention, les volets sont battants.

Les volets sont déplacés entre une position fermée dans laquelle ils opposent une surface étanche à la libération de composition gazeuse, et une position ouverte dans laquelle ils sont sensiblement orientés selon le flux de composition gazeuse dans la conduite d'évacuation.

Les volets sont par exemple articulés pivotants dans la conduite d'évacuation, entre une position fermée et au moins une position ouverte. Ils sont notamment articulés pivotants autour d'un axe parallèle à un axe transverse à ladite conduite d'évacuation. Plus particulièrement, les volets parallèles et les volets séries sont avantageusement tous articulés pivotants autour d'au moins un axe parallèle au même axe transverse à ladite conduite d'évacuation.

Dans des modes de réalisation particulièrement avantageux, les volets sont déplacés entre une position fermée et une position ouverte selon un mouvement battant formé de la combinaison d'une rotation et d'une translation, notamment afin de bien dégager une ouverture d'évacuation à travers laquelle est libérée la composition gazeuse lorsque ledit volet est en position ouverte.

De plus, avantageusement et selon l'invention, chaque actionneur est disposé, par rapport audit siège d'un côté de l'enceinte du ballon atmosphérique.

Ainsi, les actionneurs se trouvent dans l'enceinte, notamment lorsque tous les volets parallèles et/ou tous les volets séries sont en position fermée. En effet, l'hélium ou le dihydrogène généralement utilisés comme composition gazeuse dans l'enceinte sont des gaz secs, sans humidité. Ainsi, dans un dispositif selon l'invention les actionneurs sont avantageusement exempts de carénage.

De plus, avantageusement et selon l'invention, le dispositif comprend en outre une transmission mécanique entre chaque actionneur et au moins un volet, ladite transmission mécanique est adaptée pour que ledit volet en position fermée maintienne cette position fermée, y compris en l'absence d'effort dudit actionneur.

Ainsi, les volets d'un dispositif selon l'invention, lorsqu'ils sont en position fermée, restent en position fermée, même en l'absence d'alimentation des actionneurs, y compris en présence d'une différence de pression entre deux faces opposées dudit volet - c'est-à-dire entre l'enceinte et l'atmosphère extérieure au ballon atmosphérique-, résultant en un effort tendant à déplacer ledit volet d'une position fermée vers une position ouverte.

Cela permet de limiter la consommation d'énergie du dispositif de libération selon l'invention, ce qui est essentiel dans un ballon atmosphérique dont l'énergie embarquée est limitée.

De plus, cela permet de s'assurer qu'un volet reste en position fermée en cas de défaillance de son actionneur.

Les actionneurs sont avantageusement des moteurs électriques.

L'invention s'étend également à un procédé de contrôle d'un dispositif selon l'invention. Plus particulièrement, l'invention s'étend à un procédé de contrôle d'un dispositif dans lequel chaque actionneur est alimenté et contrôlé indépendamment des autres actionneurs.

Dans un procédé selon l'invention plusieurs volets parallèles sont actionnés indépendamment, et les volets séries sont actionnés indépendamment des volets parallèles.

Avantageusement et selon l'invention, au lancement du ballon atmosphérique, chaque volet parallèle est en position fermée et chaque volet série est en position ouverte.

De plus, avantageusement et selon l'invention,
- les volets parallèles sont actionnés dans un mode de fonctionnement usuel dans lequel chaque volet parallèle peut être actionné jusqu'à une position fermée,
- les volets séries sont actionnés dans un mode de fonctionnement dégradé dans lequel au moins un volet parallèle ne peut pas être actionné jusqu'à une position fermée.

Au moins deux volets parallèles étant indépendants entre eux, en cas de blocage de l'un d'entre eux en position fermée, au moins un autre volet parallèle peut être déplacé en position ouverte pour évacuer de la composition gazeuse de l'enceinte vers l'atmosphère.

Un seul volet parallèle suffit à contrôler la quantité de composition gazeuse contenue dans l'enceinte du ballon atmosphérique. Ainsi, dès lors qu'au moins un volet parallèle peut être actionné entre une position ouverte et une position fermée, dans les deux sens, et notamment jusqu'à une position fermé pour assurer une fermeture hermétique de l'enceinte, les volets séries ne sont pas actionnés.

Si au contraire l'un des volets parallèles est bloqué en position ouverte après avoir été ouvert à partir de sa position initiale fermée, les volets séries, indépendants des volets parallèles, peuvent être déplacés de leur position ouverte initiale vers une position fermée de façon à fermer l'enceinte. Les volets séries sont alors utilisés pour le reste de la mission pour contrôler le flux de composition gazeuse s'échappant de l'enceinte.

Avantageusement et selon l'invention les volets parallèles et série sont contrôlés depuis le sol. Des signaux de commande sans fil sont envoyés à destination du dispositif de libération selon l'invention, lesdits signaux de commande comprenant des données représentatives de commandes en ouverture ou en fermeture de chaque jeu de volets indépendants.

La position instantanée de chaque jeu de volets est avantageusement connue grâce au dispositif de surveillance, dont les signaux sont envoyés sans fil à destination d'un dispositif récepteur.

L'invention concerne également un dispositif de libération caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique en perspective d'un dispositif de libération de composition gazeuse selon un mode de réalisation conforme à l'invention,
- la figure 2 est une représentation schématique en vue en coupe longitudinale du dispositif de la figure 1 dans lequel la position d'un volet parallèle est différente de sa position de la figure 1,
- la figure 3 est une représentation schématique en vue en coupe longitudinale du dispositif de la figure 1, selon le même plan de coupe que la figure 2, avec des volets séries dans une position différente de leur position des figures 1 et 2,

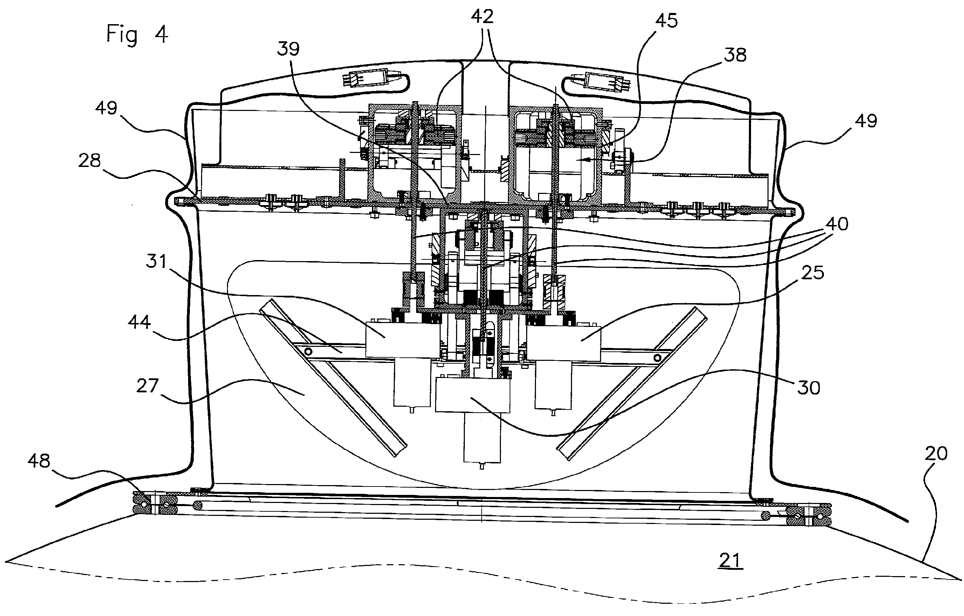

- la figure 4 est une représentation schématique en vue en coupe longitudinale du dispositif de la figure 1, selon un plan de coupe orthogonal au plan de coupe de la figure 2.

Le mode de réalisation représenté du dispositif de libération de composition gazeuse selon l'invention comprend une conduite d'évacuation 23 montée au sommet d'un ballon atmosphérique 20, notamment au sommet de l'enveloppe d'un ballon atmosphérique. La conduite d'évacuation 23 comprend à cet effet une embase 48 adaptée pour pouvoir être reliée à l'enveloppe d'un ballon atmosphérique.

Le ballon atmosphérique présente une enceinte 21 remplie d'une composition gazeuse et séparée d'une atmosphère 22 extérieure entourant le ballon atmosphérique par ladite enveloppe du ballon atmosphérique. Dans l'exemple présenté, la composition gazeuse contenue dans l'enceinte 21 du ballon atmosphérique 20 est de l'hélium pur.

La conduite d'évacuation 23 relie l'enceinte 21 à l'atmosphère 22 extérieure et permet la libération d'hélium dans l'atmosphère extérieure 22. La conduite d'évacuation présente une forme globalement cylindrique de révolution, notamment une forme tronconique évasée du côté de l'atmosphère extérieure.

La conduite d'évacuation 23 comprend un siège 28 formant une restriction locale d'une section de passage de la conduite d'évacuation. Le siège 28 forme notamment un collet de faible épaisseur en saillie de la surface intérieure de la conduite d'évacuation.

Le siège présente en outre une portion centrale pleine, dite plateforme centrale 39, s'étendant selon un axe transverse à la conduite d'évacuation, notamment selon un diamètre de la conduite d'évacuation.

En outre, le siège présente deux ouvertures, dites ouvertures d'évacuation 32, réparties symétriquement de part et d'autre de la plateforme centrale 39. Chaque ouverture d'évacuation 32 présente globalement une forme en demi-lune (demi-disque dont la partie la plus proche du centre est ôtée à largeur constante le long du diamètre du disque).

Le dispositif comprend en outre un premier volet parallèle 24 adapté pour pouvoir fermer une première des deux ouvertures d'évacuation 34 en venant en contact contre une face, dite face extérieure 33, du siège 28, au-delà des bords périphériques de ladite ouverture d'évacuation.

En outre, chaque ouverture d'évacuation présente un joint d'étanchéité 36, 37 périphérique disposé à la périphérie de l'ouverture d'évacuation, sur chaque face du siège. Avantageusement, les joints d'étanchéité d'une même ouverture d'évacuation sur les deux faces du siège 28 sont réalisés en une seule pièce d'étanchéité adaptée pour pouvoir être assemblée sur un bord périphérique de ladite ouverture d'évacuation. Chaque pièce d'étanchéité présente une lèvre d'étanchéité sur chaque face du siège, pour former les deux joints d'étanchéité d'une ouverture d'évacuation.

Le premier volet parallèle 24 est relié par une transmission 38 mécanique à un actionneur 25 dédié audit premier volet parallèle 24. Le deuxième volet parallèle 26 est relié par une transmission 38 mécanique distincte de celle du premier volet parallèle 24 à un actionneur 31 dédié audit deuxième volet parallèle 26. Chaque volet parallèle est ainsi actionné indépendamment de l'autre volet parallèle.

Le dispositif est ainsi résistant à des pannes survenant sur un volet parallèle lorsque celui-ci est en position fermée et reste bloqué en position fermée : le second volet parallèle permet d'ouvrir l'enceinte et de libérer de l'hélium dans l'atmosphère.

En outre, tant que les deux volets parallèles sont fonctionnels, le débit d'hélium dans la conduite d'évacuation peut être contrôlé de façon très précise. En effet, un opérateur peut choisir de libérer de l'hélium à un débit élevé en ouvrant les deux volets parallèles simultanément, ou de libérer une quantité modérée d'hélium en n'ouvrant qu'un seul volet parallèle.

Le dispositif comprend en outre deux volets séries 27, 29 adaptés pour pouvoir fermer les deux ouvertures d'évacuation 32 en venant en contact contre une face, dite face intérieure 35, opposée à la face extérieure, du siège 28, au-delà des bords périphériques de ladite ouverture d'évacuation, notamment au contact d'un joint d'étanchéité 36, 37.

Les volets parallèles 24, 26 et les volets séries 27, 29 sont adaptés pour venir au contact des joints d'étanchéité 36, 37 et, en les écrasant en position fermée, fermer hermétiquement l'enceinte 21 vis-à-vis de l'atmosphère 22.

Le dispositif comprend en outre un deuxième volet parallèle 26 adapté pour pouvoir fermer la deuxième des deux ouvertures d'évacuation 32 en venant en contact contre ladite face extérieure 33 du siège 28, au-delà des bords périphériques de ladite ouverture d'évacuation, notamment au contact d'un joint d'étanchéité 37.

Dans le mode de réalisation particulier présenté, 50% de la section de la conduite d'évacuation est fermée de façon permanente par le siège 28. La section de passage est donc d'environ 50% de la section de la conduite d'évacuation.

Chaque ouverture d'évacuation présente donc une section d'environ 50% de la section de passage soit 25% de la section de la conduite d'évacuation.

En position fermée, les volets séries sont au contact des joints d'étanchéité 36, 37 de sorte qu'ils forment, avec le siège 28 et les joints d'étanchéité 36, 37 une cloison étanche à l'hélium entre l'enceinte 21 et l'atmosphère 22.

De même, en position fermée, les volets parallèles sont au contact des joints d'étanchéité 36, 37 de sorte qu'ils forment, avec le siège 28 et les joints d'étanchéité 36, 37 une cloison étanche à l'hélium entre l'enceinte 21 et l'atmosphère 22.

Les deux volets séries sont actionnés par un troisième actionneur 30 auquel ils sont reliés par une transmission 38 mécanique propre. Ainsi, les volets séries 27, 29 sont actionnés conjointement, mais ils sont actionnés indépendamment des volets parallèles 24, 26.

Ainsi, en cas de défaillance de l'actionnement d'un volet parallèle en position ouverte, les volets séries peuvent être fermés, de sorte que l'enceinte peut être fermée. Le débit d'hélium est alors contrôlé à l'aide des volets séries et, le cas échéant, du second volet parallèle restant opérationnel.

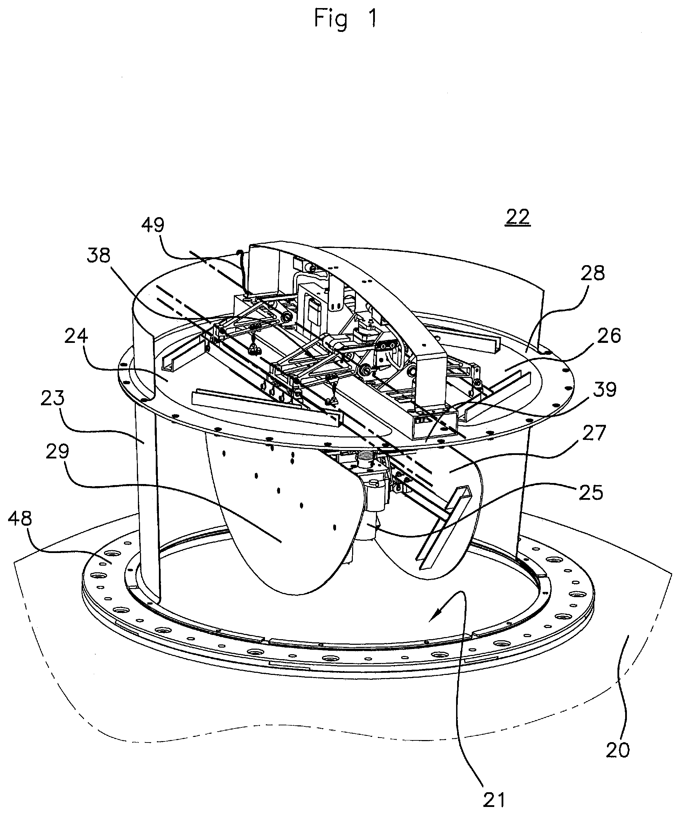

C'est pourquoi, dans un procédé conforme à l'invention, au décollage du ballon atmosphérique, les volets parallèles 24, 26 sont avantageusement en position fermée et les volets séries 27, 29 en position ouverte. Cette configuration est représentée en figure 1.

En position ouverte, les volets parallèles 24, 26 sont, par rapport au siège 28, du côté de l'atmosphère extérieure 22. En position ouverte, les volets séries 27, 29 sont, par rapport au siège 28, du côté de l'enceinte 21. En position fermée, les volets parallèles 24, 26 et les volets séries 27, 29 sont tous fermés sur le même siège 28.

Les actionneurs 25, 30, 31 des volets 24, 26, 27, 29 sont des moteurs électriques. Ils sont disposés du côté de l'enceinte par rapport au siège 28, de sorte qu'ils sont dans les conditions de l'enceinte et non dans les conditions de l'atmosphère extérieure. Les actionneurs 25, 30, 31 sont donc avantageusement exempts de carénage, notamment exempts de carénage de protection contre l'humidité.

Ci-ensuite, une transmission 38 mécanique de volet 24, 26, 27, 29 est décrite. La majeure partie des pièces mobiles constituant les transmissions 38 mécaniques sont disposées, par rapport au siège 28 et aux volets en position fermée, du côté de l'atmosphère pour les volets parallèles, du côté de l'enceinte pour les volets séries. Ainsi, l'encombrement autour du siège 28 est minimal et tous les volets séries et parallèle peuvent se fermer sur un même siège, de part et d'autre de celui-ci.

Des vis sans fin 40 montées selon un axe parallèle à un axe longitudinal de la conduite d'évacuation sont actionnées chacune par l'un des actionneurs 25, 30, 31 des volets parallèles et série 24, 26, 27, 29. Les vis sans fin 40 d'actionnement des volets parallèles 24, 26 traversent la plateforme centrale 39 par une traversée étanche.

Un écrou à billes 41 est monté sur chaque vis sans fin du côté extérieur de la vis sans fin (après la traversée étanche, du côté de l'atmosphère). Chaque écrou à billes 41 est entraîné le long de la vis sans fin, dans un sens ou dans un autre en fonction du sens de rotation de l'actionneur.

Chaque écrou à billes 41 est relié par des liaisons pivot d'axe orthogonal à l'axe de la vis sans fin 40 à deux bielles 42 de part et d'autre dudit écrou à billes 41. Chaque bielle 42 est en outre reliée à deux bras de levier 43 auxquels lesdites bielles 42 sont articulées par une liaison pivot d'axe parallèle à la liaison pivot entre écrou à billes 41 et bielles 42.

Chaque bras de levier 43 est monté solidaire d'un arbre 50 pivotant autour d'un axe fixe par rapport à un bâti 45 monté fixe sur le siège 28 - notamment sur la plateforme centrale 39 du siège 28. L'axe fixe de pivotement des bras de levier 43 est distinct de l'axe de leur liaison pivot avec lesdites bielles 42.

Chaque bras de levier est en outre relié par une liaison pivot à un support 44 de volet.

Chaque volet 24, 26, 27, 29 présente un support 44 de volet monté fixe sur une face extérieure (du côté de l'atmosphère) des volets parallèles 24, 26 et sur une face intérieure (du côté de l'enceinte) des volets séries 27, 29. Chaque support 44 de volet s'étend contre un volet parallèlement à un axe de pivotement du volet entre une position fermée et une position ouverte. Chaque support 44 de volet s'étend sur au moins 60% de la longueur du volet, de façon à assurer un bon maintien du volet contre les joints d'étanchéité 36, 37, notamment dans les coins des volets en demi-lune.

Chaque transmission mécanique comprend en outre un troisième bras de levier 43 monté pivotant autour dudit axe fixe et relié par une liaison pivot au support 44 de volet, mais qui n'est pas relié par une liaison pivot aux bielles 42.

Par ailleurs, la disposition des trois liaisons pivot mobiles (entre l'écrou à bille 41 et les bielles 42, entre les bielles 42 et les bras de levier 43, et entre les bras de levier 43 et le support 44) est adaptée pour que, en l'absence d'alimentation de l'actionneur, et donc en l'absence de moment sur la vis sans fin 40, la transmission mécanique 38 soit telle que le volet en position fermée reste en position fermée malgré une différence de pression entre l'enceinte et l'atmosphère extérieure. Plus particulièrement, la transmission mécanique 38 est adaptée pour que, en position fermé, le volet exerce un effort non-nul sur le siège 28, y compris en l'absence d'effort transmis par l'actionneur dudit volet. Le volet exerce notamment un effort de compression d'un joint d'étanchéité entre ledit volet et une face du siège.

Dans le mode de réalisation présenté, la pression d'hélium dans l'enceinte exerce un effort perpendiculaire à la surface d'un volet lorsque ce dernier est en position fermée. Cet effort est repris par les bras de levier 43 qui subissent donc un moment autour de leur axe de pivot fixe par rapport au bâti. La transmission est adaptée pour que, lorsque le volet est en position fermée, le moment subi par les bras de levier 43 est transmis aux bielles sous forme d'un effort dans leur axe. Les bielles sont, lorsque le volet est en position fermée, disposées selon un axe orthogonal à l'axe de la vis sans fin. La vis sans fin oppose donc un effort résistant à l'effort subi par le volet en premier lieu, de sorte que la transmission mécanique 38 oppose un effort résistant à l'ouverture du volet, cela même en l'absence d'effort appliqué par l'actionneur.

Lorsqu'ils sont ouverts d'une position fermée vers une position ouverte, les volets sont d'abord éloignés sensiblement en translation du siège 28. Dans son déplacement en ouverture, un volet vient en butée contre des butées 47 en saillie du bâti, notamment une partie du volet située du côté de la plateforme centrale 39 du siège 28 vient en butée contre des butées en saillie du bâti 45 situé du côté extérieur de la plateforme centrale 39 du siège 28. Les butées permettent de s'assurer que les volets s'alignent parallèlement à un axe longitudinal de la conduite d'évacuation en position ouverte, de façon à ne pas gêner le flux d'hélium vers l'extérieur.

En outre, au moins deux des trois bras de levier -avantageusement les deux bras de levier les plus éloignés les uns des autres- sont reliés directement au volet par une liaison élastique, par exemple par un ressort 46. Les ressorts 46 sont décalés par rapport au support 44, ils sont notamment fixés entre le support et la zone du volet venant en butée contre la butée 47. Lorsqu'un volet est en position ouverte, le ressort 46 est étiré en traction, de sorte que ledit volet est maintenu en position ouverte, à proximité du bâti 45, d'une part par la liaison pivot entre le support 44 avec les bras de levier 43 qui empêche toute translation du volet, et d'autre part par les ressorts 46 et les butées 47 qui empêchent toute rotation du volet respectivement dans un sens et dans un autre sens autour de ladite liaison pivot. Ainsi, tout mouvement - notamment toute vibration - du volet autour de la liaison pivot entre le support 44 avec les bras de levier 43, lors de la libération d'hélium, est évitée. La raideur des ressorts est avantageusement choisie pour éviter des phénomènes de résonance du volet en fonction de l'excitation mécanique produite par une libération de composition gazeuse dans la conduite d'évacuation 23.

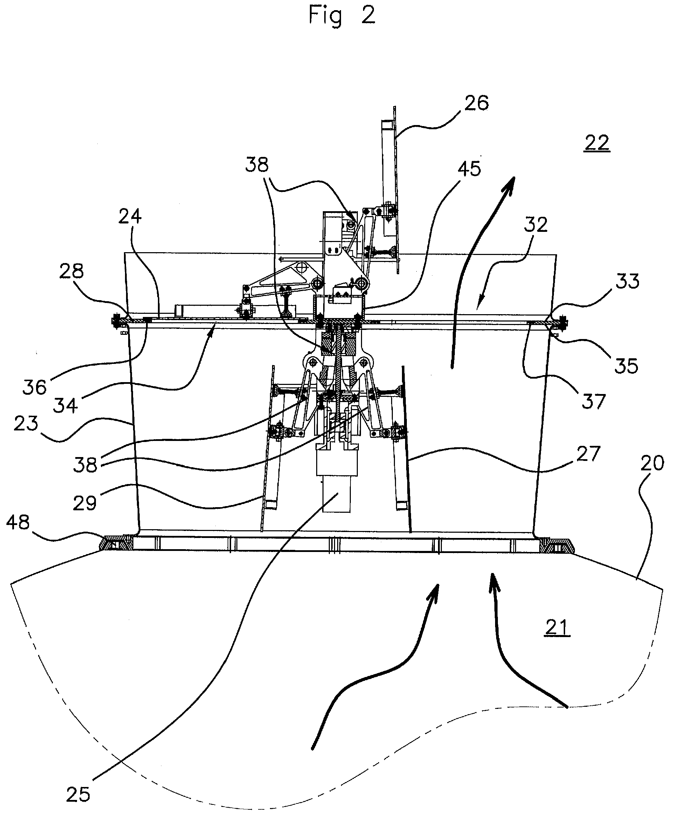

Un flux d'hélium de l'enceinte 21 vers l'atmosphère extérieure 22, lorsqu'un volet parallèle est en position ouverte et que les volets séries 27, 29 sont en position ouverte, est représenté par des flèches à la figure 2. La configuration représentée en figure 2, avec un volet parallèle en position fermée, un volet parallèle en position ouverte et les deux volets séries en position ouverte peut correspondre à différentes situations. Soit l'opérateur a choisi de n'ouvrir que l'une des deux ouvertures d'évacuation 32 pour obtenir un débit modéré d'hélium dans l'atmosphère. Soit un volet parallèle est resté bloqué en position fermée et l'opérateur n'a pas d'autre choix que d'ouvrir le second volet parallèle pour libérer de l'hélium dans l'atmosphère.

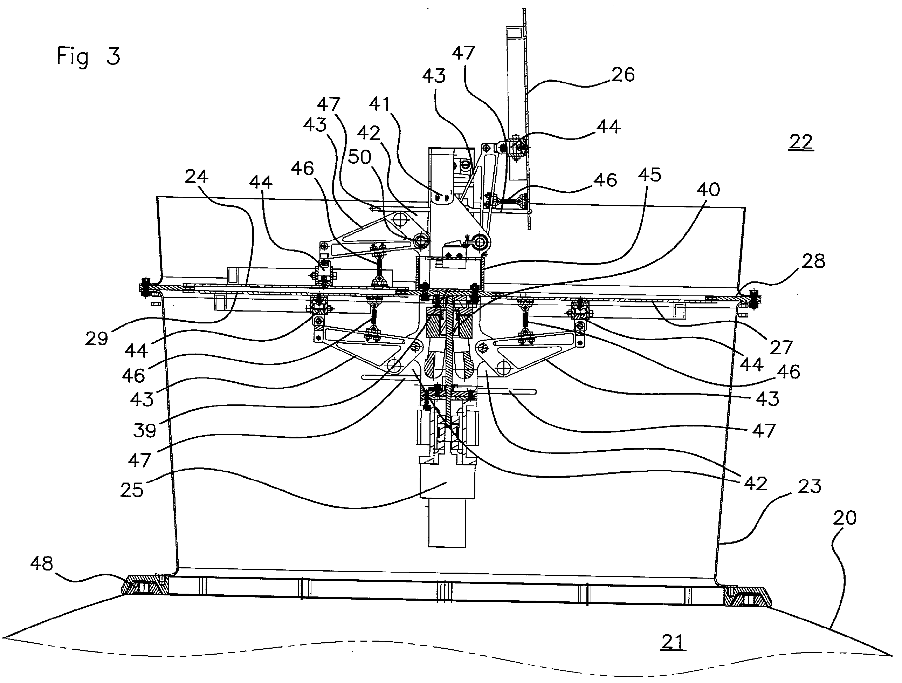

Soit, enfin, un volet parallèle est resté bloqué en position ouverte. Auquel cas, si un opérateur souhaite fermer l'enceinte, il commande alors les volets séries 27, 29 pour qu'ils passent en position fermée. C'est la configuration représentée en figure 3 dans laquelle un volet parallèle est bloqué en position ouverte et les deux volets séries 27, 29 sont en position fermée.

Un dispositif de libération de composition gazeuse contenue dans une enceinte de ballon atmosphérique permet donc de maintenir un contrôle du ballon atmosphérique malgré une panne d'un volet.

Un opérateur du dispositif de libération reçoit des informations sur la position (en particulier « ouvert » ou « fermé ») de chaque jeu de volets indépendant. À cet effet, le dispositif selon l'invention comprend un dispositif de surveillance adapté pour déterminer la position de chaque jeu de volets indépendant.

Le dispositif de surveillance comprend au moins un micro-contacteur, avantageusement deux micro-contacteurs montés à proximité de l'arbre 50 pivotant par rapport au bâti 45. L'arbre comprend avantageusement au moins un doigt en saillie adapté pour venir au contact d'un micro-contacteur lorsque le volet auquel il est relié par une transmission mécanique 38 est en position fermée. Ainsi, les micro-contacteurs permettent de détecter de façon redondante qu'un volet est en position fermée, ou qu'il ne l'est pas et donc qu'il est dans une position ouverte permettant à la composition gazeuse de s'échapper - même à un faible débit - vers l'atmosphère 22 extérieure.

Les micro-contacteurs sont par exemple du type des T3LD60FL commercialisés par ABB Control ® (69680 Chassieu, France).

Un dispositif selon l'invention comprend avantageusement au moins deux processeurs adaptés pour élaborer des commandes des actionneurs 25, 30, 31 des volets 24, 26, 27, 29.

Le dispositif de surveillance comprend quatre câbles, dits câbles de surveillance (non représentés sur les figures), dans lesquels transitent les données de surveillance. Dans un premier câble de surveillance des données issues d'un premier micro-contacteur, représentatives de la position d'un premier volet parallèle 24, sont envoyées à un premier processeur adapté pour élaborer des commandes de puissance de l'actionneur 25 du premier volet parallèle 24. Le premier processeur est relié à l'actionneur 25 du premier volet parallèle 24 par un premier câble de commande.

Dans un deuxième câble de surveillance, des données, issues d'un deuxième micro-contacteur, représentatives de la position du deuxième volet parallèle 26 sont envoyées à un deuxième processeur adapté pour élaborer des commandes de puissance de l'actionneur 31 du deuxième volet parallèle 26. Le deuxième processeur est relié à l'actionneur 31 du deuxième volet parallèle 26 par un deuxième câble de commande.

Dans un troisième câble de surveillance, des données, issues d'un troisième micro-contacteur, représentatives de la position des deux volets séries 27, 29 sont envoyées audit premier processeur, adapté pour élaborer des commandes de puissance de l'actionneur 30 des volets séries 27, 29.

Dans un quatrième câble de surveillance, des données, issues d'un quatrième micro-contacteur, représentatives de la position des deux volets séries 27, 29 sont envoyées audit deuxième processeur, adapté pour élaborer des commandes de puissance de l'actionneur 30 des volets séries 27, 29.

Le premier processeur et le deuxième processeur sont reliés à l'actionneur 30 des volets séries 27, 29 par un même troisième câble de commande.

Les troisième et quatrième micro-contacteurs et les troisième et quatrième câbles de surveillance sont donc redondants.

Rien n'empêche de prévoir des liaisons de commande et/ou de surveillance sans fil, chaque actionneur disposant alors d'une source d'énergie locale.

Les données de surveillance élaborées par le dispositif de surveillance sont avantageusement transmises, par exemple par des moyens de communication sans fil à bord du ballon atmosphérique - le cas échéant partagé par d'autres instruments embarqués - à destination d'un dispositif de réception au sol adapté pour présenter l'information contenue par lesdites données de surveillance à un opérateur, et plus particulièrement à un opérateur humain.

Le dispositif selon l'invention reçoit des données de commandes représentatives de commandes envoyées par un opérateur, et reçues à bord du ballon atmosphérique via lesdits moyens de communication. Des données de commandes propres à chaque actionneur sont envoyées.

En outre, chaque actionneur 25, 30, 31 est alimenté en électricité à partir d'une source d'énergie embarquée (batterie(s), panneaux photovoltaïques, etc.) par un câble d'alimentation 49 dédié distinct des câbles d'alimentation des deux autres actionneurs

L'invention peut faire l'objet de nombreuses autres variantes de réalisation non représentées.

Ainsi le nombre de volets parallèles et/ou de volets séries peut être plus élevé. De même, le nombre d'actionneurs et de transmission mécanique peut varier de sorte que le nombre de jeu de volets parallèles et/ou le nombre de jeu de volets séries peut être plus élevé.

D'autres formes de conduite d'évacuation et/ou de volets peuvent être envisagées.

## Revendications

1. Dispositif de libération d'une composition gazeuse contenue dans une enceinte (21) de ballon atmosphérique (20) à une pression supérieure à une pression régnant dans une atmosphère (22) extérieure au ballon atmosphérique,
ledit dispositif comprenant :
- une conduite d'évacuation (23) capable de relier l'enceinte (21) du ballon
atmosphérique (20) à cette atmosphère (22) extérieure,
- au moins deux volets, dits volets parallèles (24, 26), disposés dans ladite conduite d'évacuation (23), et adaptés pour, en position fermée, fermer chacun une portion distincte d'une section de la conduite d'évacuation (23),
- un actionneur (25) adapté pour pouvoir déplacer un premier volet parallèle (24) entre une première position, dite position fermée, de limitation au moins de libération de composition gazeuse, et une deuxième position, dite position ouverte, de libération de composition gazeuse,
- un actionneur (31) adapté pour pouvoir déplacer un deuxième volet parallèle (26) entre une première position, dite position fermée, de limitation au moins de libération de composition gazeuse, et une deuxième position, dite position ouverte, de libération de composition gazeuse,
- au moins un volet, dit volet série (27, 29), disposé dans ladite conduite d'évacuation (23), distinct dudit volet parallèle (24),
- un actionneur (30) adapté pour pouvoir déplacer ledit volet série (27, 29) entre une position, dite position fermée, de limitation au moins de libération de composition gazeuse, et une position, dite position ouverte, de libération de composition gazeuse,
la conduite d'évacuation (23) étant entièrement fermée, lorsque tous les volets parallèles sont en position fermée,
la conduite d'évacuation (23) étant entièrement fermée, lorsque chaque volet série est en position fermée,
**caractérisé en ce que** ledit actionneur (31) du deuxième volet parallèle (26) est adapté pour pouvoir déplacer le deuxième volet parallèle (26) indépendamment de la position du premier volet parallèle (24).

2. Dispositif selon la revendication 1, **caractérisé en ce que** ledit actionneur (30) dudit volet série (27, 29) est adapté pour pouvoir déplacer ledit volet série (27, 29) indépendamment de la position du premier volet parallèle (24) et indépendamment de la position du deuxième volet parallèle (26).

3. Dispositif selon l'une des revendications 1 ou 2, **caractérisé en ce qu'**il comprend au moins trois actionneurs (25, 30, 31) distincts adaptés pour pouvoir respectivement actionner indépendamment:
- au moins un premier volet parallèle (24),
- au moins un deuxième volet parallèle (26) distinct du premier volet parallèle,
- chaque volet série (27, 29).

4. Dispositif selon l'une des revendications 1 à 3, **caractérisé en ce que** les actionneurs (25, 30, 31) des volets parallèle (24, 26) et des volets série (27, 29) sont des moteurs électriques.

5. Dispositif selon la revendication 4, **caractérisé en ce qu'**il est adapté pour recevoir des signaux de commande sans fil comprenant des données représentatives de commandes des moteurs électriques.

6. Dispositif selon l'une des revendications 1 à 5, **caractérisé en ce qu'**il comprend en outre au moins un dispositif, dit dispositif de surveillance, adapté pour déterminer la position ouverte ou la position fermée d'au moins deux volets parallèles actionnés indépendamment et d'au moins un volet série.

7. Dispositif selon la revendication 6, **caractérisé en ce qu'**il il est adapté pour pouvoir envoyer sans fil des signaux dudit dispositif de surveillance à destination d'un dispositif récepteur.

8. Dispositif selon l'une des revendications 1 à 7, **caractérisé en ce qu'**il comprend deux volets parallèles (24, 26) et deux volets séries (27, 29), lesdits volets séries (27, 29) étant actionnés conjointement.

9. Dispositif selon l'une des revendications 1 à 8, **caractérisé en ce que**:
- la conduite d'évacuation (23) comprend un siège (28) interposé dans ladite conduite d'évacuation entre l'enceinte (21) et l'atmosphère (22) extérieure, ledit siège présentant au moins une ouverture, dite ouverture d'évacuation (32, 34), entre l'enceinte (21) et l'atmosphère (22) extérieure,
- chaque volet parallèle (24, 26) est adapté pour, en position fermée, être en butée contre une première face (33) dudit siège (28),
- chaque ouverture d'évacuation (32, 34) est entièrement fermée, lorsque tous les volets parallèles (24, 26) sont en position fermée,
- chaque volet série (27, 29) est adapté pour, en position fermée, être en butée contre une deuxième face (35) dudit siège (28), opposée à la première face (33),
- chaque ouverture d'évacuation (32, 34) est entièrement fermée lorsque tous les volets séries (27, 29) sont en position fermée.

10. Dispositif selon la revendication 9, **caractérisé en ce que** :
- ledit siège (28) comprend au moins un joint d'étanchéité (36, 37) sur chaque face, à la périphérie de chaque ouverture d'évacuation (32, 34),
- chaque volet parallèle (24, 26) et chaque volet série (27, 29) est adapté pour, en position fermée, comprimer un joint d'étanchéité (36, 37).

11. Dispositif selon l'une des revendications 9 ou 10, **caractérisé en ce que** chaque actionneur (25, 30, 31) est disposé, par rapport audit siège (28) d'un côté de l'enceinte (21) du ballon atmosphérique (20).

12. Dispositif selon l'une des revendications 1 à 11, **caractérisé en ce qu'**il comprend en outre une transmission mécanique (38) entre chaque actionneur (25, 30, 31) et au moins un volet (24, 26, 27, 29), et **en ce que** ladite transmission mécanique (38) est adaptée pour que ledit volet (24, 26, 27, 29) en position fermée maintienne cette position fermée, y compris en l'absence d'effort dudit actionneur (25, 30, 31).

13. Procédé de contrôle d'un dispositif selon l'une des revendications 1 à 12 dans lequel chaque actionneur (25, 30, 31) est alimenté et contrôlé indépendamment des autres actionneurs (25, 30, 31).

14. Procédé selon la revendication 13, **caractérisé en ce que** :
- les volets parallèles (24, 26) sont actionnés dans un mode de fonctionnement usuel dans lequel chaque volet parallèle (24, 26) peut être actionné jusqu'à une position fermée,
- les volets séries (27, 29) sont actionnés dans un mode de fonctionnement dégradé dans lequel au moins un volet parallèle (24, 26) ne peut pas être actionné jusqu'à une position fermée.

15. Ballon atmosphérique (20) comprenant une enceinte (21) adaptée pour pouvoir contenir une composition gazeuse à une pression supérieure à une pression régnant dans une atmosphère (22) extérieure au ballon atmosphérique, **caractérisé en ce qu'**il comprend un dispositif de libération de ladite composition gazeuse selon l'une des revendications 1 à 12.

16. Ballon selon la revendication 15, **caractérisé en ce qu'**il comprend des moyens de communication sans fil adaptés pour :
- recevoir des données représentatives de commandes des actionneurs (25, 30, 31),
- envoyer sans fil des signaux d'un dispositif, dit dispositif de surveillance, adapté pour déterminer la position ouverte ou la position fermée d'au moins deux volets parallèles actionnés indépendamment et d'au moins un volet série, à destination d'un dispositif récepteur.

17. Procédé de contrôle d'un ballon atmosphérique selon l'une des revendications 15 ou 16, **caractérisé en ce que**, au lancement du ballon atmosphérique (20), chaque volet parallèle (24, 26) est en position fermée et chaque volet série (27, 29) est en position ouverte.

## Patentansprüche

1. Vorrichtung zur Freisetzung einer in einem abgeschlossenen Raum (21) eines Wetterballons (20) in einem Druck enthaltenen Gaszusammensetzung, der höher ist, als ein in einer Atmosphäre (22) außerhalb des Wetterballons vorherrschender Druck,
wobei die besagte Vorrichtung folgendes umfasst:
- eine Ableitung (23), die in der Lage ist, den abgeschlossenen Raum (21) des Wetterballons (20) mit dieser äußeren Atmosphäre (22) zu verbinden,
- zumindest zwei Klappen, die parallel gesetzte Klappen (24, 26) genannt werden, die in der besagten Ableitung (23) angeordnet sind, und ausgeführt sind, um in der geschlossenen Position jeweils einen unterschiedlichen Abschnitt eines Querschnitts der Ableitung (23) zu schließen,
- einen Steller (25), der ausgeführt ist, um eine erste parallel gesetzte Klappe (24) zwischen einer ersten Position, die geschlossene Position genannt wird, zumindest zur Beschränkung der Freisetzung der Gaszusammensetzung, und einer zweiten Position bewegen zu können, die offene Position genannt wird, zur Freisetzung der Gaszusammensetzung,
- einen Steller (31), der ausgeführt ist, um eine zweite parallel gesetzte Klappe (26) zwischen einer ersten Position, die geschlossene Position genannt wird, zumindest zur Beschränkung der Freisetzung der Gaszusammensetzung, und einer zweiten Position bewegen zu können, die offene Position genannt wird, zur Freisetzung der Gaszusammensetzung,
- zumindest eine Klappe, die in Reihe gesetzte Klappe (27, 29) genannt wird, die in der besagten Ableitung (23) angeordnet ist, und sich von der besagten parallel gesetzten Klappe (24) unterscheidet,
- einen Steller (30), der ausgeführt ist, um die besagte in Reihe gesetzte Klappe (27, 29) zwischen einer ersten Position, die geschlossene Position genannt wird, zumindest zur Beschränkung der Freisetzung der Gaszusammensetzung, und einer zweiten Position bewegen zu können, die offene Position genannt wird, zur Freisetzung der Gaszusammensetzung,
wobei die Ableitung (23) vollkommen geschlossen ist, wenn sich alle parallel gesetzten Klappen in der geschlossenen Position befinden,
wobei die Ableitung (23) vollkommen geschlossen ist, wenn sich jede in Reihe gesetzte Klappe in der geschlossenen Position befindet,
**dadurch gekennzeichnet, dass** der besagte Steller (31) der zweiten parallel gesetzten Klappe (26) ausgeführt ist, um die zweite parallel gesetzte Klappe (26) unabhängig von der Position der ersten parallel gesetzten Klappe (24) bewegen zu können.

2. Vorrichtung nach Anspruch 1, **dadurch gekennzeichnet, dass** der besagte Steller (30) der besagten in Reihe gesetzten Klappe (27, 29) ausgeführt ist, um die besagte in Reihe gesetzte Klappe (27, 29) unabhängig von der Position der ersten parallel gesetzten Klappe (24) und unabhängig von der Position der zweiten parallel gesetzten Klappe (26) bewegen zu können.

3. Vorrichtung nach einem der Ansprüche 1 oder 2, **dadurch gekennzeichnet, dass** sie zumindest drei unterschiedliche Steller (25, 30, 31) umfasst, die ausgeführt sind, um jeweils unabhängig voneinander folgendes betätigen zu können:
- zumindest eine erste parallel gesetzte Klappe (24),
- zumindest eine zweite parallel gesetzte Klappe (26), die sich von der ersten parallel gesetzten Klappe unterscheidet,
- jede in Reihe gesetzte Klappe (27, 29).

4. Vorrichtung nach einem der Ansprüche 1 bis 3, **dadurch gekennzeichnet, dass** die Steller (25, 30, 31) der parallel gesetzten Klappen (24, 26) und der in Reihe gesetzten Klappen (27, 29) Elektromotoren sind.

5. Vorrichtung nach Anspruch 4, **dadurch gekennzeichnet, dass** sie ausgeführt ist, um drahtlos Steuersignale empfangen zu können, die repräsentative Steuerdaten für die Elektromotoren umfassen.

6. Vorrichtung nach einem der Ansprüche 1 bis 5, **dadurch gekennzeichnet, dass** sie darüber hinaus zumindest eine Vorrichtung umfasst, die Überwachungsvorrichtung genannt wird, die ausgeführt ist, um die offene Position oder die geschlossene Position von zumindest zwei parallel gesetzten Klappen, die unabhängig voneinander betätigt werden, und von zumindest einer in Reihe gesetzten Klappe zu bestimmen.

7. Vorrichtung nach Anspruch 6, **dadurch gekennzeichnet, dass** sie ausgeführt ist, um drahtlos Signale von der besagten Überwachungsvorrichtung an eine Empfängervorrichtung zu senden.

8. Vorrichtung nach einem der Ansprüche 1 bis 7, **dadurch gekennzeichnet, dass** sie zwei parallel gesetzte Klappen (24, 26) und zwei in Reihe gesetzte Klappen (27, 29) umfasst, wobei die besagten in Reihe gesetzten Klappen (27, 29) gemeinsam betätigt werden.

9. Vorrichtung nach einem der Ansprüche 1 bis 8, **dadurch gekennzeichnet, dass**:
- die Ableitung (23) einen Sitz (28) umfasst, der zwischen dem abgeschlossenen Raum (21) und der äußeren Atmosphäre (22) in die besagte Ableitung eingesetzt ist, wobei der besagte Sitz zumindest eine Öffnung zwischen dem abgeschlossenen Raum (21) und der äußeren Atmosphäre (22) aufweist, die Evakuierungsöffnung (32, 34) genannt wird,
- jede parallel gesetzte Klappe (24, 26) ausgeführt ist, um sich in der geschlossenen Position auf Anschlag an einer ersten Fläche (33) des besagten Sitzes (28) anzulegen,
- jede Evakuierungsöffnung (32, 34) vollkommen geschlossen ist, wenn alle parallel gesetzten Klappen (24, 26) in der geschlossenen Position sind,
- jede in Reihe gesetzte Klappe (27, 29) ausgeführt ist, um in der geschlossenen Position auf Anschlag an einer zweiten Fläche (35) des besagten Sitzes (28) anzuliegen, die sich gegenüber der ersten Fläche (33) befindet,
- jede Evakuierungsöffnung (32, 34) vollkommen geschlossen ist, wenn alle in Reihe gesetzten Klappen (27, 29) in der geschlossenen Position sind.

10. Vorrichtung nach Anspruch 9, **dadurch gekennzeichnet, dass**:
- der besagte Sitz (28) zumindest eine Dichtung (36, 37) an jeder Fläche am Umkreis einer jeden Evakuierungsöffnung (32, 34) umfasst,
- jede parallel gesetzte Klappe (24, 26) und jede in Reihe gesetzte Klappe (27, 29) ausgeführt ist, um in der geschlossenen Position eine Dichtung (36, 37) zu komprimieren.

11. Vorrichtung nach einem der Ansprüche 9 oder 10, **dadurch gekennzeichnet, dass** jeder Steller (25, 30, 31) im Verhältnis zum besagten Sitz (28) auf einer Seite des abgeschlossenen Raumes (21) des Wetterballons (20) angeordnet ist.

12. Vorrichtung nach einem der Ansprüche 1 bis 11, **dadurch gekennzeichnet, dass** sie darüber hinaus einen mechanischen Antrieb (38) zwischen jedem Steller (25, 30, 31) und zumindest einer Klappe (24, 26, 27, 29) umfasst, und dadurch, dass der besagte mechanische Antrieb (38) ausgeführt ist, damit die besagte Klappe (24, 26, 27, 29) in der geschlossenen Position diese geschlossene Position auch ohne Kraftaufwand des besagten Stellers (25, 30, 31) beibehält.

13. Verfahren zur Kontrolle einer Vorrichtung nach einem der Ansprüche 1 bis 12, wobei jeder Steller (25, 30, 31) jeweils unabhängig von den anderen Stellern (25, 30, 31) versorgt und kontrolliert wird.

14. Verfahren nach Anspruch 13, **dadurch gekennzeichnet, dass**:
- die parallel gesetzten Klappen (24, 26) in einem üblichen Betriebsmodus betätigt werden, in dem jede parallel gesetzte Klappe (24, 26) bis zu einer geschlossenen Position betätigt werden kann,
- die in Reihe gesetzten Klappen (27, 29) in einem abgestuften Betriebsmodus betätigt werden, in dem zumindest eine parallel gesetzte Klappe (24, 26) nicht bis zu einer geschlossenen Position betätigt werden kann.

15. Wetterballon (20), einen abgeschlossenen Raum (21) umfassend, der ausgeführt ist, um eine Gaszusammensetzung mit einem Druck zu enthalten, der höher ist, als ein Druck, der in einer Atmosphäre (22) außerhalb des Wetterballons vorherrscht, **dadurch gekennzeichnet, dass** er eine Vorrichtung zur Freisetzung der besagten Gaszusammensetzung nach einem der Ansprüche 1 bis 12 umfasst.

16. Ballon nach Anspruch 15, **dadurch gekennzeichnet, dass** er drahtlose Kommunikationsmittel umfasst, die ausgeführt sind, um:
- repräsentative Steuerdaten für die Steller (25, 30, 31) zu empfangen,
- drahtlos Signale einer Vorrichtung, die Überwachungsvorrichtung genannt wird, und ausgeführt ist, um die offene Position oder die geschlossene Position von zumindest zwei parallel gesetzten Klappen, die unabhängig voneinander betätigt werden, und zumindest einer in Reihe gesetzten Klappe zu bestimmen, an eine Empfangsvorrichtung zu senden.

17. Verfahren zur Kontrolle eines Wetterballons nach einem der Ansprüche 15 oder 16, **dadurch gekennzeichnet, dass** sich jede parallel gesetzte Klappe (24, 26) beim Start des Wetterballons (20) in der geschlossenen Position befindet und sich jede in Reihe gesetzte Klappe (27, 29) in der offenen Position befindet.

## Claims

1. Device for releasing a gaseous composition contained in an envelope (21) of an atmospheric balloon (20) at a pressure that is higher than a pressure that prevails in an atmosphere (22) external to said atmospheric balloon, said device comprising:
- an exhaust line (23) capable of linking said envelope (21) of said atmospheric balloon (20) to said external atmosphere (22);
- at least two flaps, named parallel flaps (24, 26), disposed inside said exhaust line (23) and adapted, in a closed position, to each close a distinct portion of a section of said exhaust line (23);
- an actuator (25) adapted to be able to move a first parallel flap (24) between a first position, named closed position, for limiting at least the release of said gaseous composition, and a second position, named open position, for releasing said gaseous composition;
- an actuator (31) adapted to be able to move a second parallel flap (26) between a first position, named closed position, for limiting at least the release of said gaseous composition, and a second position, named open position, for releasing said gaseous composition;
- at least one flap, named series flap (27, 29), disposed inside said exhaust line (23), distinct from said parallel flap (24);
- an actuator (30) adapted to be able to move said series flap (27, 29) between a position, named closed position, for limiting at least the release of said gaseous composition, and a position, named open position, for releasing said gaseous composition,
said exhaust line (23) being fully closed when all of said parallel flaps are in the closed position,
said exhaust line (23) being fully closed when each series flap is in the closed position,
**characterized in that** said actuator (31) of said second parallel flap (26) is adapted to be able to move said second parallel flap (26) independently of the position of said first parallel flap (24).

2. Device according to Claim 1, **characterized in that** said actuator (30) of said series flap (27, 29) is adapted to be able to move said series flap (27, 29) independently of the position of said first parallel flap (24) and independently of the position of said second parallel flap (26).

3. Device according to Claim 1 or 2, **characterized in that** it comprises at least three distinct actuators (25, 30, 31) adapted to be able to respectively independently actuate:
- at least one first parallel flap (24);
- at least one second parallel flap (26) distinct from said first parallel flap;
- each series flap (27, 29).

4. Device according to one of Claims 1 to 3, **characterized in that** said actuators (25, 30, 31) of said parallel flaps (24, 26) and of said series flaps (27, 29) are electric motors.

5. Device according to Claim 4, **characterized in that** it is adapted to wirelessly receive control signals comprising data representing commands for said electric motors.

6. Device according to one of Claims 1 to 5, **characterized in that** it further comprises at least one device, named monitoring device, that is adapted to determine the open position or the closed position of at least two independently actuated parallel flaps and of at least one series flap.

7. Device according to Claim 6, **characterized in that** it is adapted to be able to wirelessly send signals from said monitoring device to a receiver device.

8. Device according to one of Claims 1 to 7, **characterized in that** it comprises two parallel flaps (24, 26) and two series flaps (27, 29), said series flaps (27, 29) being jointly actuated.

9. Device according to one of Claims 1 to 8, **characterized in that**:
- said exhaust line (23) comprises a seat (28) interposed in said exhaust line between said envelope (21) and said external atmosphere (22), said seat having at least one opening, named exhaust opening (32, 34), between said envelope (21) and said external atmosphere (22);
- each parallel flap (24, 26) is adapted, in a closed position, to be in abutment against a first face (33) of said seat (28);
- each exhaust opening (32, 34) is fully closed when all of said parallel flaps (24, 26) are in a closed position;
- each series flap (27, 29) is adapted, in a closed position, to be in abutment against a second face (35) of said seat (28) opposite said first face (33);
- each exhaust opening (32, 34) is fully closed when all of said series flaps (27, 29) are in a closed position.

10. Device according to Claim 9, **characterized in that**:
- said seat (28) comprises at least one seal (36, 37) on each face, on the periphery of each exhaust opening (32, 34);
- each parallel flap (24, 26) and each series flap (27, 29) is adapted, in a closed position, to compress a seal (36, 37).

11. Device according to Claim 9 or 10, **characterized in that** each actuator (25, 30, 31) is disposed, relative to said seat (28), on one side of said envelope (21) of said atmospheric balloon (20).

12. Device according to one of Claims 1 to 11, **characterized in that** it further comprises a mechanical transmission (38) between each actuator (25, 30, 31) and at least one flap (24, 26, 27, 29), and **in that** said mechanical transmission (38) is adapted so that when said flap (24, 26, 27, 29) is in a closed position it maintains this closed position, even in the absence of force from said actuator (25, 30, 31).

13. Method for controlling a device according to one of Claims 1 to 12, **characterized in that** each actuator (25, 30, 31) is fed and controlled independently of the other actuators (25, 30, 31).

14. Method according to Claim 13, **characterized in that**:
- said parallel flaps (24, 26) are actuated in a normal operating mode, in which each parallel flap (24, 26) can be actuated to go to a closed position;
- said series flaps (27, 29) are actuated in a degraded operating mode, in which at least one parallel flap (24, 26) cannot be actuated to go to a closed position.

15. Atmospheric balloon (20) comprising an envelope (21) adapted to be able to contain a gaseous composition at a pressure that is higher than a pressure that prevails in an atmosphere (22) external to said atmospheric balloon, **characterized in that** it comprises a device for releasing said gaseous composition as claimed in any one of claims 1 to 12.

16. Balloon according to Claim 15, **characterized in that** it comprises wireless communication means adapted to:
- receive data representing commands for said actuators (25, 30, 31);
- wirelessly send signals from a device, named monitoring device, which is adapted to determine the open position or the closed position of at least two independently actuated parallel flaps and at least one series flap, to a receiver device.

17. Method for controlling an atmospheric balloon according to Claim 15 or 16, **characterized in that**, when said atmospheric balloon (20) is launched, each parallel flap (24, 26) is in a closed position and each series flap (27, 29) is in an open position.
